# EUROPEAN PATENT SPECIFICATION

(11) **EP 0 793 911 B1**
(45) Date of publication and mention of the grant of the patent: **13.06.2001**
(21) Application number: 96103440.2
(22) Date of filing: 06.03.1996
(51) Int. Cl.: A01K 5/00, A01F 29/00, A01D 90/10

(54) **Cutter-mixer-feeder and bed-straw spreader wagon**
Futtermischwagen und Strohstreuer
Benne mélangeuse distributrice et épandeuse de paille pour litière

(43) Date of publication of application: 10.09.1997
(73) Proprietor: SEKO S.p.A., 35010 Curtarolo (Padova) (IT)
(72) Inventor: Loppoli, Giuseppe, 35010 Grantorto (PD) (IT)
(74) Representative: Bonini, Ercole

(56) References cited:
- EP-A- 0 155 884
- EP-A- 0 494 812
- FR-A- 2 335 370
- FR-A- 2 376 621

## Description

The invention is a cutter-mixer-feeder wagon that also makes litters and is particularly suitable for cutting, mixing and feeding long-fibre products, such as fodder and grass or straw silages, and for making litters.

It is known that to make litters specific machines provided with apposite devices are mostly employed.

In one of the known kinds of wagon the device for making litters comprises a rotary disc with substantially vertical axis, positioned on the outer rear part of the wagon, to which the straw is conveyed after being cut and mixed inside the wagon itself.

The drawback of said devices for making litters is that the straw is distributed through centrifugal force in tangential directions with respect to the rotary disc and therefore the products is scattered indiscriminately on the whole surrounding area, at a distance that depends on the rotation speed of the rotary disc itself.

Further, with this system it is not possible to put straw on stables where the protection barriers, such as enclosures or stable partitions, exceed a given height.

There are machines that beside making litters also cut, mix and feed fodder. Generally, however, these machines carry out cutting, mixing and feeding operations with the mechanics that is typical of the machines for making litters; therefore, the cut and mixed fodder is not suitable nourishment for the animals, because of the bad mixing. Further, these machines cannot cut cylindrical hay or grass silage bales.

Moreover, these kinds of wagon are characterized by rather complex structures and therefore they are quite expensive to produce.

*The document FR-A-2376621 discloses a bed-straw spreader comprising a screw feeder and a duct with a fan for spreading the straw out of the wagon. No means are provided for cutting and mixing also fodder and grass.*

The chief aim of the invention is the implementation of a machine that is a cutter-mixer-feeder wagon capable of processing any product for zootechnical use and at the same time can distribute straw for litters, so that the same machine can be used for two different functions with equally good results as regards both the mixing and feeding of fodder and the preparation of litters.

Another aim is the implementation of a machine that should also be substantially simple and make use of the cutting and mixing means that are typical of the cutter-mixer-feeder wagon also when cutting and distributing straw for litters.

A further goal is that the wagon object of the invention should make it possible to distribute straw for the litters selectively, that is, to direct the delivery opening, and therefore the straw jet, towards certain areas, lifting it in order to make litters also beyond the barriers that are often to be found in stables or stablings.

The goals described above are achieved through the implementation of a cutter-mixer-feeder and bed-straw spreader wagon for long-fibre products, the main features of which are according to claim 1.

According to a favourite application of the invention, said conveyor unit that conveys the material to the delivery opening is applied to the side wall of the wagon and is used to distribute straw, while the opposite wall of said wagon is provided with another opening for the unloading of mixed fodder.

The wagon object of the invention can also be provided with a single conveyor to be used either for feeding fodder and for making litters, without the presence of a different opening to be used for unloading fodder.

To advantage, the wagon object of the invention allows the user to cut, mix, feed long-fibre materials and to make litters with the same machine.

The above-mentioned goals and advantages will be better highlighted in the description of a practical application among many of the invention in question, illustrated in the attached drawings, wherein:
- Fig. 1 is a schematic view of the transversal section of a particular application of the wagon object of the invention;
- Fig. 2 is a front view of a detail of the suction fan and of part of the conveying duct, seen from the inside of the wagon of Fig. 1.

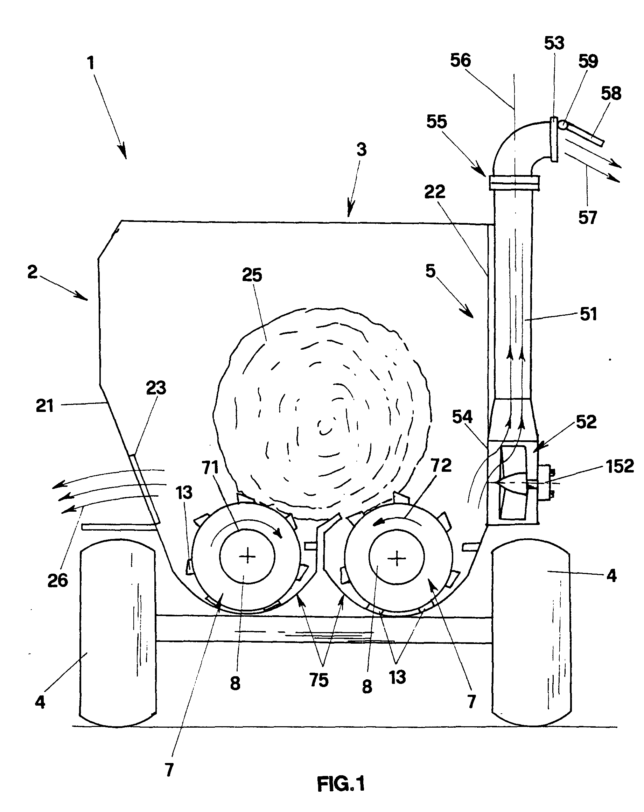

As shown in Fig. 1, the wagon object of the invention, indicated as a whole by 1, comprises a container 2 resting on wheels 4, which in its upper part is provided with an opening 3 for loading the material to be processed.

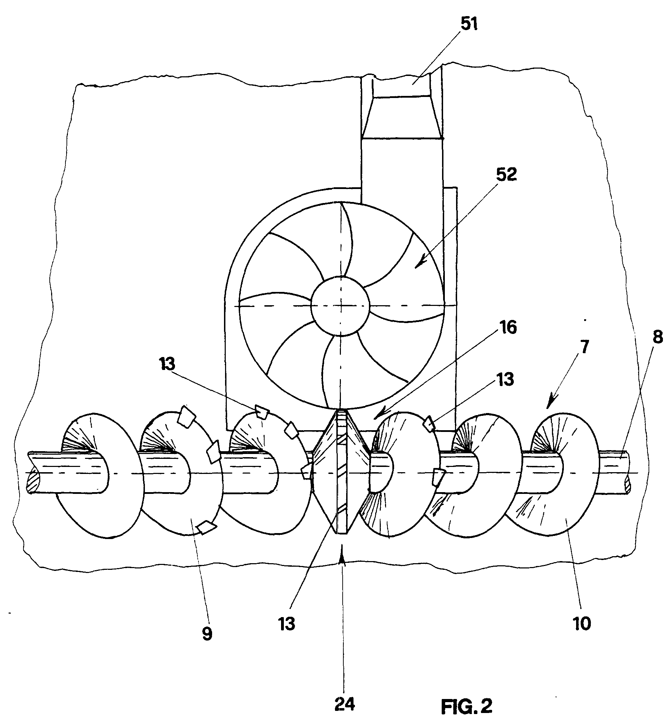

The container 2 is preferably made of sheet and in correspondence with its bottom there is a pair of screw feeders 7, each one of which, as shown also in Fig. 2, is formed by a central core 8 on which two opposing spirals 9 and 10 are coiled and is housed inside a compartment 75 with curved profile, obtained on the bottom of the container 2. Further, the two screw feeders rotate in opposite directions 71 and 72.

In particular, the spiral 9 is coiled anticlockwise, while the spiral 10 is coiled clockwise, so that starting from the two ends of the central core 8 the spirals converge on the central part 24 of the screw feeder to which they belong.

Further, each coil of said spirals is provided with a plurality of knives .13 on its edge, said knives being fixed in such a way as to protrude from the external edge of the spiral itself and cooperating with one another and with the bottom of the container 2, so that they are suitable for cutting long-fibre materials.

It can also be observed that in correspondence with the central area 24 each screw feeder 7 is provided with a discoidal element 16, the function of which is to avoid the clogging of the screw feeder as much as possible and at the same time to facilitate the mixing of the product during the cutting phase.

In different applications said discoidal elements 16 may not be provided and in any case the screw feeders can also have different shapes, for example that of a continuous spiral with any pitch.

The product to be cut, for example packed as a bale 25, is put on the screw feeders 7 and during the rotation of the screw feeders the knives 13 foliate and cut the bale and convey the cut material towards the central area 24 of each screw feeder.

A door 23 for unloading the cut and mixed fodder towards the outside is positioned on the side wall 21 of the wagon, in front of the central area 24 of the screw feeder.

Analogously, on the other wall 22 of the wagon, opposite the wall 21, there is a conveyor unit 5 for the processed material, which, as it can be observed, comprises a conveying duct 51 outside the wall 22 of the wagon and is provided with a fan 52 for sucking the material cut inside the wagon at one end and with a delivery opening 53 for the unloading of the sucked material outside the wagon at the other end.

It can be observed, in particular, that the suction opening 54 of said fan 52, which is set in rotation by means of an hydraulic motor 152, is positioned in correspondence with the central area 24 of the screw feeders and in front of the unloading door 23, so that said fan 52 sucks the material exactly in the area where it is conveyed by the rotation of the screw feeders after being properly cut.

In the present example, since the wagon is provided both with a door 23 and with a conveyor unit 5, it is clear that the door 23 will be used to unload fodder, while the conveyor unit 5 will be used for sucking and distributing straw.

On the other hand, in case of embodiments in which the wagon is not provided with the door 23 for unloading fodder, the conveyor unit 5 can be used indifferently either for feeding fodder and for distributing straw to make litters.

As regards the delivery opening 53, this is coupled with the conveying duct 51 by means of a rotation joint 55 that ensures its rotation on the vertical axis 56, in such a way as to arrange it according to the unloading direction 57 desired by the user. In this case the conveying duct 51 is outside the container 3.

Further, the directing device 58, which can rotate on the hinge 59, can take different positions in order to direct the downward flow of the product that is being delivered.

It is clear, therefore, that the described wagon can be used indifferently either for feeding fodder and for making litters.

For example, if the bale 25 is made up of fodder the wagon can be used to feed the animals: in fact, with the door 23 open, the cut product, if necessary mixed with other products, is conveyed to the central position 24 by the screw feeders and is expelled through the door 23 itself with direction 26.

If, on the other hand, the bale 25 is made up of straw, with the door 23 closed and the fan 52 in operation, the cut and mixed straw is sucked in correspondence with the central area 24 of the screw feeders and after passing through the duct 51 is expelled through the delivery opening 53 with direction 57.

According to the above description, it is clear that the wagon object of the present invention achieves the fixed goals.

As first thing, it achieves the aim to implement a machine that cuts, mixes and feeds fodder or cuts straw and distributes it to make litters, all this by means of a single wagon provided with at least one horizontal screw feeder and at least one conveyor.

The wagon object of the invention can be subject to modifications that, however, are to be considered as part of the invention itself.

A possible modification, for example, can be the implementation of a delivery duct positioned directly in the air space, properly shaping the inside and outside walls of the wagon, instead of positioning a pipe inside or outside the air space itself.

Further, as already mentioned, the machine can be provided with one or more than two screw feeders, instead of just two, and these, in different executions, may also have a different structure than described.

Said variants and any other modification, however, are to be considered as completely protected by the present invention.

## Claims

1. Cutter-mixer-feeder and bed-straw spreader wagon for long-fibre products, comprising:
- a container (2) provided with at least one opening (3) for the introduction of the material to be processed (25) and with at least one unloading opening (23, 54) to unload the processed material;
- at least one rotary screw feeder (7) with substantially horizontal axis positioned on the bottom of said container, provided with at least one pair of spirals (9, 10) having opposite coiling directions starting from the ends of a single cylindrical core (8) provided with knives (13) on its edge and suited to convey the processed material to an area between them (24) substantially positioned in front of said at least one unloading opening;
- at least one conveyor unit (5) that conveys the processed material outside said container, characterized in that it comprises: at least one conveying duct (51) provided with an unloading opening (54) and with a fan (52) for sucking the material from the inside of said container (2) at one end and with at least one delivery opening (53) communicating with the outside at the other end, said suction fan (52) being positioned in front of the area to which the opposing spirals of said at least one screw feeder convey the material.

2. Wagon according to claim 1, characterized in that said rotary screw feeders (7) rotate in opposite directions (71, 72).

3. Wagon according to claim 1, characterized in that said conveying duct (51) is fixed to the wall (22) of the wagon, opposite the wall (21) in which the door (23) for the unloading of fodder is obtained.

4. Wagon according to claim 1, characterized in that said delivery opening (53) is connected with said conveying duct (51) by means of a rotation joint (55).

5. Wagon according to claim 1, characterized in that the delivery opening (53) is provided with a directing device (58) that can rotate on a hinge (59) and is suitable for directing the flow of the product that is expelled through said conveying duct (51).

## Patentansprüche

1. Schneid-Mix-Zufuhrvorrichtung und Strohstreuwagen für langfaserige Produkte, folgendes umfassend:
- einen Behälter (2) mit wenigstens einer Öffnung (3) zum Einfüllen des zu verarbeitenden Materials (25) und mit wenigstens einer Öffnung (23, 54) zur Entladung des verarbeiteten Materials;
- wenigstens einem, am Boden des Behälters positionierten und rotierenden Schneckenzuführer (7) mit im Wesentlichen waagerechter Achse, mit wenigstens einem Paar Spiralen (9, 10) mit einander entgegengesetzten Winderichtungen ausgehend von den Enden eines einzelnen, zylindrischen Kerns (8), versehen mit Messern (13) an seiner Kante und dazu geeignet, das verarbeitete Material in einen Bereich zwischen ihnen (24) zu fördern, welcher sich im Wesentlichen vor der wenigstens einen Entladeöffnung befindet;
- wenigstens einer Förderereinheit (5), die das verarbeitete Material aus dem Behälter herausleitet, dadurch gekennzeichnet, dass sie folgendes umfasst: wenigstens eine Förderleitung (51) mit einer Entladeöffnung (54) und mit einem Gebläse (52) zum Ansaugen des Materials aus dem Inneren des Behälters (2) an einem Ende und mit wenigstens einer mit dem Äußeren kommunizierenden Ausgabeöffnung (53) am anderen Ende, wobei dieses Ansauggebläse (52) vor dem Bereich positioniert ist, in den die einander entgegengesetzten Spiralen des wenigstens einen Schneckenzuführers das Material leiten.

2. Wagen gemäß Patentanspruch 1), dadurch gekennzeichnet, dass die besagten rotierenden Schneckenzuführer (7) in einander entgegengesetzte Richtungen drehen (71, 72).

3. Wagen gemäß Patentanspruch 1), dadurch gekennzeichnet, dass die Förderleitung (51) an der Wagenwand (22) befestigt ist, gegenüber der Wand (21), in welcher sich die Öffnung (23) zur Entladung des Futters befindet.

4. Wagen gemäß Patentanspruch 1), dadurch gekennzeichnet, dass die Ausgabeöffnung (53) durch eine Drehkupplung (55) mit der Förderleitung (51) verbunden ist.

5. Wagen gemäß Patentanspruch 1), dadurch gekennzeichnet, dass die Ausgabeöffnung (53) mit einer Lenkvorrichtung (58) versehen ist, die sich an einem Scharnier (59) drehen kann und geeignet ist, die Fließrichtung des durch die Förderleitung (51) ausgestoßenen Materials zu bestimmen.

## Revendications

1. Un chariot découpeur-mélangeur-distributeur-empailleur pour produits à fibres longues comprenant:
- un conteneur (2) équipé d'au moins une ouverture (3) pour l'introduction du matériel à usiner (25) et d'au moins une ouverture de déchargement (23, 54) pour décharger le matériel usiné;
- au moins un transporteur à vis avec un axe essentiellement horizontal positionné dans le fond dudit conteneur, muni d'au moins un couple de spirales (9, 10) ayant des directions d'enroulement opposées commençant des extrémités d'un noyau cylindrique unique (8) équipé de couteaux (13) sur son bord et indiqué pour convoyer le matériel usiné vers une zone qui se trouve parmi ces spirales (24) essentiellement positionnée en face de ladite au moins une ouverture de déchargement;
- au moins un convoyeur (5) qui convoie le matériel usiné à l'extérieur dudit conteneur, caractérisé en ce qu'il comprend: au moins un conduit de convoyage (51) équipé d'une ouverture de déchargement (54) et d'un ventilateur (52) pour aspirer le matériel de l'intérieur dudit conteneur (2) sur une extrémité et d'au moins une ouverture de distribution (53) communiquant avec l'extérieur sur l'autre extrémité, ledit ventilateur d'aspiration (52) étant positionné en face de la zone à laquelle les spirales opposées dudit au moins un transporteur à vis convoient le matériel.

2. Un chariot selon la revendication 1, caractérisé en ce que ledit transporteur à vis (7) tourne en directions opposées (71, 72).

3. Un chariot selon la revendication 1, caractérisé en ce que ledit conduit de convoyage (51) est fixé à la paroi (22) du chariot, en position opposée à la paroi (21) sur laquelle se trouve la porte (23) pour le déchargement du fourrage.

4. Un chariot selon la revendication 1, caractérisé en ce que ladite ouverture de distribution (53) est reliée au conduit de convoyage (51) au moyen d'un joint de rotation (55).

5. Un chariot selon la revendication 1, caractérisé en ce que ladite ouverture de distribution (53) est équipée d'un dispositif de direction (58) pouvant tourner sur une charnière (59) et est indiquée pour diriger le flux du produit qui est ejecté à travers ledit conduit de convoyage (51).
